# EUROPEAN PATENT SPECIFICATION

(11) **EP 0 701 504 B1**
(45) Date of publication and mention of the grant of the patent: **22.07.1998**
(21) Application number: 94915480.1
(22) Date of filing: 03.06.1994
(51) Int. Cl.: B29C 45/16, F16K 15/08

(54) **METHOD FOR ASSEMBLING DURING MOLDING PARTS OF A VALVE**
VERFAHREN ZUM VERBINDEN VON TEILEN EINES VENTILS WÄHREND DES FORMENS
PROCEDE D'ASSEMBLAGE DE PIECES D'UNE SOUPAPE PENDANT LE MOULAGE

(30) Priority: 03.06.1993 US 72031
(43) Date of publication of application: 20.03.1996
(73) Proprietor: Ericson, Kurt Sture Birger, B-2970 Schilde (BE)
(72) Inventor: ERICSON, Kurt, Sture, Birger, B-2970 Schilde (BE); CHALICH, Daniel, Seminole, FL 34646 (US)
(74) Representative: Overath, Philippe
(86) International application number: PCT/BE94/00038
(87) International publication number: WO 94/29094

(56) References cited:
- EP-A- 0 412 670
- FR-A- 2 550 848
- GB-A- 2 137 922
- US-A- 4 385 025
- US-A- 4 535 807
- US-A- 5 149 589
- PATENT ABSTRACTS OF JAPAN vol. 15, no. 294 (M-1140) 25 July 1991 & JP,A,03 106 624 (CANON INC) 7 May 1991
- PATENT ABSTRACTS OF JAPAN vol. 11, no. 50 (M-562) (2497) 17 February 1987 & JP,A,61 213 118 (HITACHI MAXELL) 22 September 1986

## Description

The present invention relates to a method for assembling, during molding, parts of different plastic compostion of a valve, in particular a vacuum breaker valve, of the type as described by Applicant in its US Patent 4,535,807. As described hereunder in more details with the description of the drawings, the valve comprises a housing which includes a central passageway connectable to the vent pipe of a plumbing system and an annular port connectable to atmosphere with interposed there between a specific component (valve head) constituted of two different plastic materials.

The valve further includes a valve seat which consists of concentric generally circular upstanding beads which define between them the inlet port connected to the atmosphere and also a valve plate which consists of a generally circular ring made of a soft elastomer material and sized to cover the ring-like port formed between the above-described generally circular beads.

The valve plate has an upper surface facing away from the valve seat and a lower seat engaging surface overlying the valve seat. The lower surface has affixed thereto a valve guide consisting of a hard plastic ring having a plurality of downwardly depending guide lugs, each one of which has an internally facing slot therein. The outer wall of the support structure of the valve body for the inner seat bead has a corresponding plurality of outwardly extending fins sized to enter the slots of the guide lugs so as to firmly and smoothly guide the valve plate in its upward and downward movements away from and toward the valve seat, respectively.

The object of the present invention consists in the specific manner of assembling the valve plate to the valve guide. Until today the valve plate and valve guide are assembled together by use of adhesives. However use of adhesives has occasionally resulted in adhesive breakdown in the humid, corrosive environment in the plumbing system. Other means of attachment such as, for example, bolts have been proposed but they are equally ineffective as providing locations where corrosion and failure of the valve may take place.

According to the invention the valve guide is assembled to the valve plate in the mold, wherein the valve plate is formed. To this end the part of the valve guide that must be assembled to the valve plate is subjected in the mold wherein the valve plate is formed to the injection molding temperature and pressure so that to the valve plate when formed is fused to the part of the valve guide in contact with it.

The injection temperature and pressure of the elastomer material will be chosen by the man skilled in the art in function of the type and composition of the thermoplastic material.

As thermoplastic material, for the valve guide the well known hard polymers and copolymers with linear chain can be used and there is no limitation on the composition of the thermoplastic material which may be reinforced for instance with glass or other fibers.

Preferred hard thermoplastic materials particularly suitable for the valve guide are glass filled polypropylene, acrylonitrile-styrene copolymer as for instance acrylonitrile-butadiene-styrene and hard polyvinylchloride.

All soft elastomers which can be formed by molding can be used for the valve plate, however preferred elastomers particularly adapted are synthetic rubbers, silicone rubbers, butadiene polymers or copolymers, soft vinyl or urethane polymers, polyethylene or sulfonated polyethylene polymers, soft styrene copolymers as for instance a copolymer of styrene-ethylene and of butylene-styrene.

It is to be noted that it is already known to assemble a soft elastomeric material to a hard thermoplastic material by molding.

French patent application 2.550.481, for instance, proposes such an assembling method for a radiator shutter body for motor vehicle.

Other patents such as US Patents 5.149.589 and 4.385.025 as well as European patent application 412.670 describe other applications whereby this molding technique is used for various thermoplastic and elastomer materials.

However the specific soft valve plate which assume a tightness function and which is subjected to a high frequency of upwards and downwards movements and which by each movement should correctly cover the valve seat needs particular care. Thus it is not possible to remove the plate from the mold without deformation of the plate, if special care to the mold is not taken in advance. Therefore according to a characteristic of the invention part of the mold (top surface) is sand blasted.

Top surface means the surface of the mold facing the surface of the valve guide to be fused to the valve plate or in other words top surface is the surface of the mold forming the surface of the valve plate opposite to the surface to be assembled to the valve guide.

According to a further characteristic of the invention the correct fusion between the valve plate and valve guide is improved by roughening the surface of the valve guide to be fused to the valve plate.

Such roughening can be obtained by sand blasting the part of the mold that forms the part of the valve guide to be assembled with the valve plate.

It is to be noted that Japanese patent application 61-213118 proposes for a window frame uneven parts on joint surfaces in which a transparent plate must be placed.

According to the invention, the valve plate is thus assembled to the valve guide by the different characterizing steps which are inexpensive, highly effective, reliable, reproducible and exact in position.
- molding a valve guide from a hard thermoplastic material in a first mold, whereby the part of the mold that forms the part of the valve guide to be fused to the valve plate has a sand blasted surface, thus forming a valve guide having a part which has a roughened surface,
- placing the thus formed valve guide in a second mold capable to receive soft elastomeric material, whereby the surface of this second mold facing the roughened surface of the valve guide is sand blasted to enhance release of the molded valve head without deforming it.
- injecting in the second mold a soft elastomer to form the valve plate and subjecting only the part with roughened surface of the valve guide to the injection molding temperature and pressure so that this surface is fused to the valve plate after cooling.
The invention will be further described on the hand of a non limitative example under reference to the appended drawing Figures, wherein :
- Figure 1 shows a cross-sectional view of a valve described hereabove.
- Figure 2 shows a view looking downwardly onto the valve seat to the valve, also showing the relationship between the valve guide and outwardly exteending housing guide ribs.
- Figure 3 shows a perspective view of the specific component of the present invention.
- Figure 4 shows a view looking downwardly with respect to the view of Figure 3.
- Figure 5 shows a cross-sectional view along the line V-V of Figure 4.
- Figure 6 shows a cross-sectional view along the line VI-VI of Figure 4.

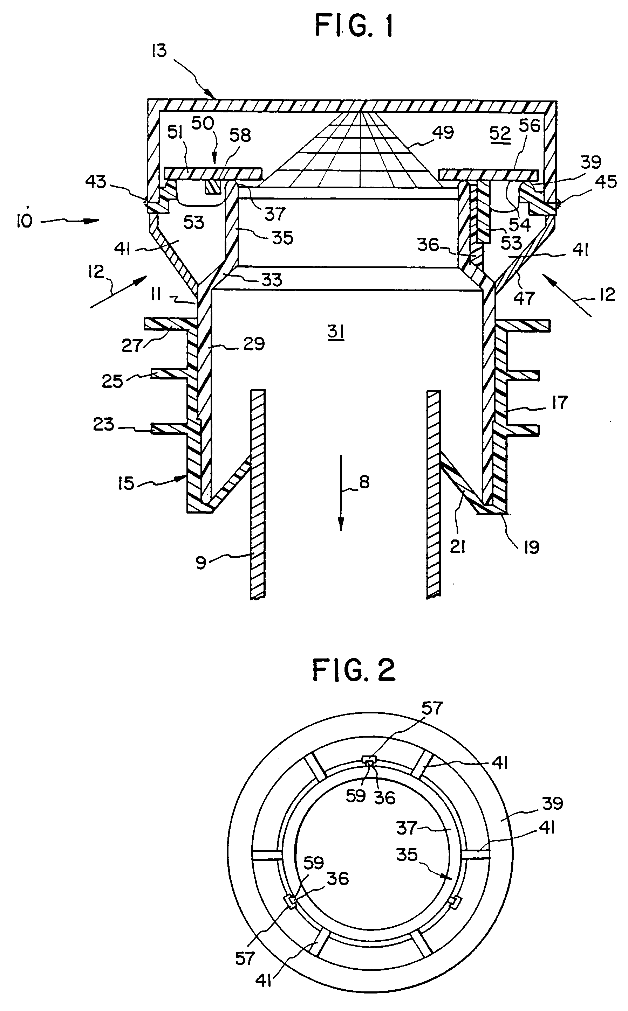

While the heart of the present example consists of the method of assembling a valving plate to the valve guide, it is believed instructive to describe, in great detail, the valve assembly, which is the environment of use of the component assembled according to the invention. In this regard, attention is first directed to Figures 1 and 2 wherein a valve assembly is generally designated by the reference numeral 10 and is seen to include a valve body 11, a cover 13 and a coupling member 15.

The coupling member 15 includes a generally cylindrical outer wall 17 having a bottom termination 19 including an upwardly extending generally frusto-conical portion 21 which may be flexed inwardly or outwardly from the position shown in Figure 1 to accommodate to vent pipes of varying sizes. In Figure 1, the vent pipe is generally designated by the reference numeral 9 and, as should be understood, is interconnected into a plumbing system of a home or building. The coupling member 15 also includes outwardly extending ring-like projections 23, 25 and 27 which are designed to facilitate coupling of the valve assembly 10 within a vent pipe rather than in surrounding relation thereto as shown in Figure 1. Thus, the coupling member 15 provides versatility in allowing the inventive valve assembly 10 to be coupled either within or in surrounding relation to a vent pipe of a plumbing system.

As shown, in Figure 1, the coupling member 15 is mounted in surrounding relation to a generally cylindrical portion 29 of the housing 11 which portion 29 contains a chamber 31 intended, as shown, to be fluidly coupled to the vent pipe 9. The portion 29 extends upwardly including a generally frusto-conical inward taper 33 and a further generally cylindrical portion 35 terminating, upwardly, in an inner annular valve seat 37 which comprises a generally circular annulus having an arcuately shaped bead-like configuration. An outer annular valve seat 39 is also provided in the valve housing 11 supported in outwardly spaced configuration with respect to the inner annular valve seat 37 by a series of fins 41 as seen in Figures 1 and 2. As best shown in Figure 2, in this example, six support fins 41 are provided.

As shown in Figure 1, the support structure of the housing 11 immediately outwardly adjacent to the outer annular valve seat 39 includes a shoulder 43 which is designed to allow firm support for the cover 13. The bead 45 is formed by sonically welding the cover 13 in assembled relation over the shoulder 43 of the housing 11 in the position shown in Figure 1. An O-ring can be used in larger versions of the breaker valve between the cover and shoulder 43.

Screens 47 and 49 are provided at the locations shown to prevent passage of vermin such as rodents, bugs, or debris. Any suitable attachment means may be employed to hold the screens 47 and 49 in their assembled locations as particularly shown in Figure 1. As should be understood from Figure 1, the screens 47 and 49 have extremely large openings large enough to allow unrestricted air flow through the valve housing 11 while being small enough to prevent passage of large debris, rodents or other vermin.

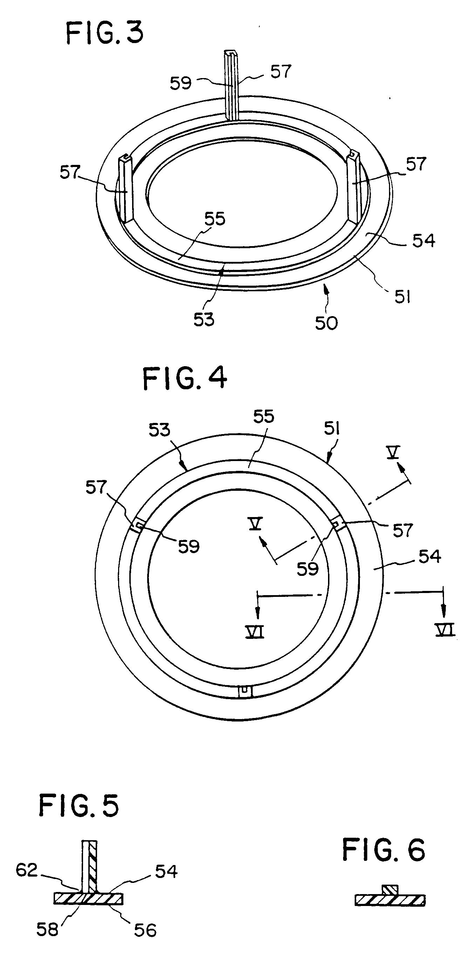

The valve head of the present invention is generally designated by the reference numeral 50 and is seen to include a a valving plate 51 and a valve guide 53. With particular reference to Figure 3, it is seen that the valving plate 51 comprises an annular ring-like device and is made of a styrene-ethylene-butylene block copolymer which is a soft resilient flexible elastomer. The valve guide 53 is made of a acrylonitrile-butadiene-styrene copolymer which is a hard thermoplastic material. It includes a ring 55 engaging the surface 54 of the valving plate 51 and a plurality of lugs 57 extending upwardly with respect to the ring 55 in the view shown in Figure 3, although, in practice, the valve head 50 is oriented upside down with respect to the view of Figure 3 as should be clearly understood from Figure 1. The orientation shown in Figure 3 is merely provided for clarity in understanding the particular structure of the valve head 50. Variations of the valve guide 53 can have one or more lugs 57.

With reference to Figures 2 and 4, it should be understood that each guide lug 57 had an inwardly directed slot 59 designed to be slidably received on exterior surfaces of guiding ribs 36 formed on the exterior walls of the cylindrical portion 35 of the valve housing 11. This relationship is best shown in Figure 2.

In the operation of the valve assembly 10, the coupling member 15 is utilized to couple the valve assembly 10 over the vent pipe 9 of a plumbing system. When a toilet is flushed in the plumbing system, this causes a suction in the direction of the arrow 8 and a reduction of pressure within the chamber 52 above the valving plate 51 so that the valving plate 51 is exposed to atmospheric pressure on its surface 54 and less than atmospheric pressure on its surface 56. This pressure differential causes the valving plate 51 to elevate with respect to its position as shown in Figure 1 allowing atmospheric air to enter in the direction of the arrows 12 and to flow in the direction of the arrow 8 until such time as the pressure within the vent pipe 9 is equal to atmospheric pressure, whereupon the pressures on the surfaces 54 and 56 of the valving plate equalize and gravity causes the valving plate 51 to resume its position as shown in Figure 1.

As pointed out above, the heart of the present invention, consists in a new method for assembling parts, of the valve head 50. In assembling the valve head 50, first the valve guide 53 is separately manufactured. The valve guide 53 is molded in any suitable manner of a copolymer of acrylonitrile-butadiene-styrene. The surface of the mold in contact with the top surface 58 of the valve guide 53 is sand blasted.

Thereafter, the valve guide 53 is placed in another mold and the soft elastomer on the basis of a styrene-ethylene-butylene block copolymer is injection molded to form in the mold the soft valving plate 51. The surface 54 of the valving plate 51 is engaged with the top surface 58 of the valve guide 53. The top surface 58 of the valve guide is roughened because of contact with a sand blasted portion of its mold. The rough top surface 58 enhances fusion between such surface 58 and valving plate 51. The second mold used to form the valving plate 51 and simultaneously fuse it to surface 58 should have a top surface sand blasted to enhance release of the valve head 50 from the mold without deforming the valving plate 51. In this orientation, the valve guide 53 and valving plate 51 are heated by the injection temperature of the soft elastomer which is in excess of 200°C and subjected to the injection pressure which is about 1000 bar. Consequently a thin layer of the surface 58 of the valve guide 53 melts and thereby fuses with the surface 54 of the valving plate 51 at 62 (Figure 5). When this melting and fusing has taken place, the assembled valve head 50 is allowed to cool resulting in the valve head 50 as used in accordance with the example of the present invention. Through assembly using this method, the valving plate 51 is maintained in permanent interconnection with the valve guide 53 regardless if the corrosive nature of the environment in which the valve head 50 operates or the degree of humidity thereof. This method of assembly of the valve head 50 has proven to be far superior to any other methods known including use of adhesives, bolting or other means of connection.

## Claims

1. Method for assembling by heat fusion a valve head (50) including a valve plate (51) and a valve guide (53) characterized by following step :
- molding a valve guide from a hard thermoplastic material in a first mold, whereby the part of the mold that forms the part of the valve guide to be fused to the valve plate has a sand blasted surface, thus forming a valve guide having a part which has a roughened surface,
- placing the thus formed valve guide in a second mold capable to receive soft elastomeric material, whereby the surface of this second mold facing the roughened surface of the valve guide is sand blasted to enhance release of the molded valve head without deforming it.
- injecting in the second mold a soft elastomer to form the valve plate and subjecting only the part with roughened surface of the valve guide to the injection molding temperature and pressure so that this surface is fused to the valve plate after cooling.

2. The method according to claim 1, characterized in that the valve guide is a copolymer of acrylonitrile-butadiene-styrene.

3. The method according to claim 1, characterized in that the valve plate is a copolymer of styrene-ethylene and butadiene-styrene.

## Patentansprüche

1. Verfahren zum Zusammenfügen eines eine Ventilplatte (51) und eine Ventilführung (53) beinhaltenden Ventilkopfes (50) durch Warmverschmelzen, gekennzeichnet durch folgende Schritte:
- Spritzgießen einer Ventilführung aus einem harten thermoplastischen Material in einer ersten Spritzform, wobei der Teil der Spritzform, der den an die Ventilplatte anzuschmelzenden Teil der Ventilführung formt, eine sandgestrahlte Oberfläche besitzt, und somit eine Ventilführung geformt wird, die einen Teil hat, der eine angerauhte Oberfläche aufweist,
- Einlegen der so geformten Ventilführung in eine zweite Spritzform, die zur Aufnahme eines weichen Elastomermaterials geeignet ist, wobei die Oberfläche dieser zweiten Spritzform, die der angerauhten Oberfläche der ventilführung zugewandt ist, sandgestrahlt ist, um das Ausformen des gespritzten Ventilkopfes, ohne ihn zu verformen, zu verbessern,
- Einspritzen eines weichen Elastomers in die zweite Spritzform, um die Ventilplatte zu formen und nur den Ventilführungsteil mit angerauhter Oberfläche der Einspritzgießtemperatur und dem -druck aussetzen, so daß nach dem Abkühlen diese Fläche mit der Ventilplatte verschmolzen ist.

2. Verfahren nach Anspruch 1, dadurch gekennzeichnet, daß die Ventilführung ein Copolymer aus Acrylonitril-Butadien-Styrol ist.

3. Verfahren nach Anspruch 1, dadurch gekennzeichnet, daß die Ventilplatte ein Copolymer aus Styrol-Ethylen und Butadien-Styrol ist.

## Revendications

1. Procédé pour l'assemblage par fusion thermique d'une tête de valve (50) comportant un clapet (51) et un guide de clapet (53), caractérisé par les étapes suivantes:
- dans un premier moule, moulage d'un guide de clapet dans un matériau thermoplastique dur, la partie du moule qui forme la partie du guide de clapet qu'il faut fusionner au clapet ayant sa surface traitée par sablage, pour ainsi former un guide de clapet doté d'une partie dont la surface a été rendue rugueuse,
- dans un deuxième moule apte à recevoir un matériau élastomère mou, pose du guide de clapet ainsi formé, la surface de ce deuxième moule qui est tournée vers la surface rendue rugueuse du guide de clapet étant traitée par sablage pour faciliter la libération de la tête de valve moulée sans la déformer,
- injection dans le deuxième moule d'un élastomère mou, pour former le clapet en ne soumettant que la partie du guide de clapet dont la surface est rugueuse à la température et à la pression de moulage par injection, de telle sorte que cette surface fusionne avec le clapet après refroidissement.

2. Procédé selon la revendication 1, caractérisé en ce que le guide de clapet est un copolymère d'acrylonitrile-butadiène-styrène.

3. Procédé selon la revendication 1, caractérisé en ce que le clapet est un copolymère de styrène-éthylène et de butadiène-styrène.
